# EUROPEAN PATENT SPECIFICATION

(11) **EP 2 127 930 B1**
(45) Date of publication and mention of the grant of the patent: **04.01.2012**
(21) Application number: 09380112.4
(22) Date of filing: 27.05.2009
(51) Int. Cl.: B60J 7/02

(54) **Convertible roof for automobiles**
Öffnungsfähiges Dach für Fahrzeuge
Toit convertible pour automobiles

(30) Priority: 29.05.2008 ES 200801149 U
(43) Date of publication of application: 02.12.2009
(73) Proprietor: Seat, S.A., 08760 Martorell (ES)
(72) Inventor: Serrano Herrera, Josué, 08760 Martorell-Barcelona (ES); Castella Daga, Santiago, 08760 Martorell-Barcelona (ES); Candil Rodriguez, José Antonio, 08760 Martorell-Barcelona (ES); Murcia Serra, Sergio, 08760 Martorell-Barcelona (ES)
(74) Representative: Carvajal y Urquijo, Isabel

(56) References cited:
- DE-A1-102006 036 853
- FR-A- 2 814 403
- GB-A- 2 240 519

## Description

### FIELD OF THE INVENTION

The present invention refers to a convertible roof for automobiles which in the closed position defines a continuous rigid roof, while in the open position it is located in the rear part of the automobile interior. As automobile with such a roof is known from GB 2240519A.

The invention can be particularly applied to automobiles with four seats, in which the roof, when it occupies the open position is located in the area intended for the rear seats, transforming the car from a four-seat car with rigid cover into a convertible two-seat car. This occurs in the case of short wheelbase vehicles. When the body of the car is longer, that is to say, when it is a long wheelbase vehicle, a space is created between the rear seats and the trunk which is occupied by the roof in its folded position, so that the vehicle maintains its four seats in its convertible version.

### BACKGROUND OF THE INVENTION

Four-seat convertible automobiles are well-known, with rigid roof, where the roof is constituted in such a way that in the open position it is housed inside the trunk, occupying it completely, so that this hole or space does not serve its intended purpose.

GB 2240519A refers to a multi-position retractable vehicle roof which is retractable between a coupe position and a convertible position wherein the roof is stored within a rear deck and is segmented into a front fixed panel, an intermediate panel and a rear panel, been the intermediate panel telescopically retractable onto the rear panel and both retractable into the rear deck.

### DESCRIPTION OF THE INVENTION

The object of the present invention is a convertible automobile, with a rigid roof, which enables to keep the trunk hole or volume free in the open or lowered down position of the roof.

The convertible roof of the invention comprises three independent rigid transverse parts: a front fixed part which includes the windshield, an intermediate part which defines the central area of the roof, and a back part which extends to the trunk and includes the rear windshield, and the intermediate and back parts can be moved from a closed position, in which they are consecutively coupled next to the front fixed part, and an open position, in which the intermediate part is attached to the back part, and both of them are folded on the back seat area or intermediate area between the seats and the trunk.

For the intermediate part to be coupled to the back part, said intermediate part makes two movements: a first elevation movement, in which it slightly moves upwards with respect to the front and back parts of the roof, detaching from them, and a second backward movement, with a slightly arched path, at the end of which it is coupled on top of the back part of the roof.

For this movement to occur, the intermediate part of the roof is related to the back part through a mechanism which can move said intermediate part in height, between the closed position and an elevated position over the back part, and longitudinally, between the elevated part and the back part where it is superimposed over the back part, as indicated above.

As regards the back part, it is connected to the structure of the vehicle through the articulation axis, perpendicular to the longitudinal axis of the automobile, around which it can swing between an elevated position, corresponding to the closed position of the roof, and a lower folded position, in which it covers and closes the back seat area in short wheelbase vehicles, or an intermediate area between the back seats and the trunk created due to a bigger length in long wheelbase vehicles. To that end, this back position is also connected to the vehicle structure by means of a mechanism which producers the swinging of said back part, together with the intermediate part attached thereto.

The kinematics of the total mechanism is based on three fundamental movements, the first one consists of a small clockwise rotation of the intermediate part of the roof which causes a slight elevation thereof, the second one consists of a translation of this intermediate part towards the back, with a slight curve path, so that it moves in X and Z coordinates, while the third movement consists of a rotation centered in the articulation axis between the back part of the roof and the structure of the vehicle. In this movement the two juxtaposed mobile parts of the roof, the intermediate part and the back part, move, the back part of the roof being hidden and the intermediate part of the roof being visible, which turns into and acts as a cover for housing the convertible roof.

The mechanism in charge of moving the intermediate part in height and in longitudinal direction towards the back comprises, on each side of the vehicle, a main bar which supports said intermediate part, a rotation centering device for said main bar, which is connected to the back part of the roof and causes the swinging of said main bar, up to the elevation of the main part of the roof, and a secondary bar which is connected to the back part of the roof and constitutes a curve guide on which the main bar can be coupled, when it stops swinging over the rotation centering device, as well as its movement along said guide, to longitudinally move the intermediate part of the roof until it is located on top of the back part.

The main bar, which is a part of the mechanism described above, has a straight front section and a curve back section. The straight front section branches into two end arms of different length which articulate at their ends to the front and back ends of the corresponding side of the central part of the roof. The curve back part of the main bar is articulated at its free end to an action cylinder, through which both aforementioned movements of the central part of the roof are carried out. The cylinder is articulated at its lower end to the structure of the automobile.

The curve back section of the main bar has three lateral pivots, a central one through which it connects to the rotation centering device during the swinging phase of said main bar, and two ends through which the main bar connects to the guide of the secondary bar, during the phase of longitudinal movement of the central part of the roof.

The rotation centering device mentioned above consists of a part fixed to the back part of the roof, on each side thereof, and comprises an approximately horizontal groove, along which the central pivot of the curve section of the main bar moves, during its swinging, to cause the first elevation movement of the central part of the roof.

The secondary bar is slightly arched and has laterally a longitudinal channel where the end pivots of the curved section of the main bar are inserted, to define the guide of said bar and the anchoring thereof at the end of its longitudinal movement. The aforementioned longitudinal channel has on longitudinal walls a front lower outlet and back upper outlet, to which the end pivots of the curve side of the main bar can be opposed, such that whein the swinging movement ends the pivots are inserted in the channel through the aforementioned outlets, to move along the aforementioned channel and form together the guide leading to the central part of the roof in its longitudinal movement, until it is located on top of the back part of the roof.

As regards the mechanism which causes the swinging of the back part of the roof, it comprises an action cylinder, which is articulated in its lower part to the structure of the vehicle and in its upper part to the secondary bar through a pivot laterally protruding from said bar, by the opposite side to that occupied by the longitudinal channel thereof. This pivot has on its base a square, rotating around the pivot. The square is housed in a runner which drives the movement of the secondary bar, together with the main bar associated to it, during the swinging of the back part of the roof, from the closed position to the completely open position, in which it is completely folded on the back part of the vehicle interior.

### BRIEF DESCRIPTION OF THE DRAWINGS

The following is a more detailed description of the roof of the invention, so that its constitution and characteristics can be better understood, with reference to the attached drawings, presented as a non-limiting example of an embodiment.

In the drawings:
Figure 1 is a side elevation view of an automobile, including the roof of the invention, in its closed position.
Figure 2 shows the position of the action mechanisms in the closed position of the roof of figure 1.
Figure 3 is a similar view to that of figure 1, with the intermediate part of the roof elevated, to initiate its backwards movement.
Figure 4 is a similar view to that of figure 2, showing the position of the mechanisms in the position of the roof shown in figure 3.
Figure 5 is a similar view to that of figure 3, showing the intermediate part of the roof located on the back part.
Figure 6 is a similar view to that of figure 4, showing the position of the action mechanisms in the position of the roof shown in figure 5.
Figure 7 is a similar view to that of figure 5, showing the convertible roof in its completely open position.
Figure 8 is a similar, view to that of figure 6, showing the position of the action mechanisms with the roof in the position of figure 7.
Figure 9 is a perspective of the action mechanisms of the intermediate and back parts of the roof, taken from the opposite side to the one shown in figure 4.
Figure 10 is an upper plan view of the set of mechanisms shown in figure 4.
figures 11, 12 and 13 are sections of the mechanism, taken according to the cut lines XI-XI, XII-XII and XIII-XIII of figure 10.
Figure 14 is a perspective of the main bar of the action mechanism of the intermediate part of the roof.
Figure 15 is a partial perspective of the secondary bar of the action mechanism of the intermediate part of the roof.
Figure 16 represents the position of the end lugs of the arched rear section of the main bar, in the position of total closure of the roof, shown in figure 1.
Figure 17 shows the position of the end lugs of the rear curve section of the main bar, at the end of the elevation movement of the intermediate part of the roof, shown in figure 3.

### DETAILED DESCRIPTION OF AN EMBODIMINT

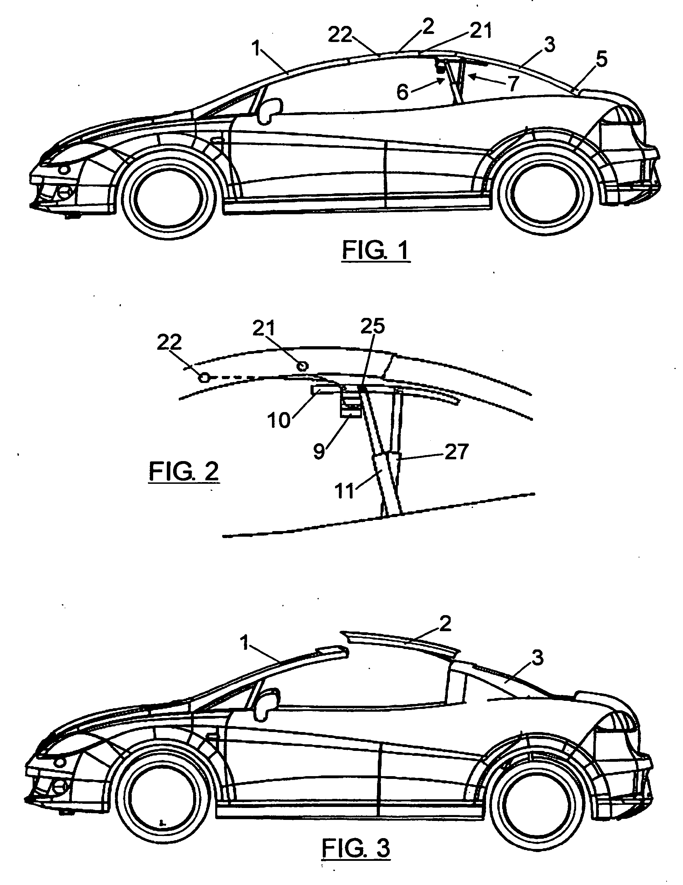

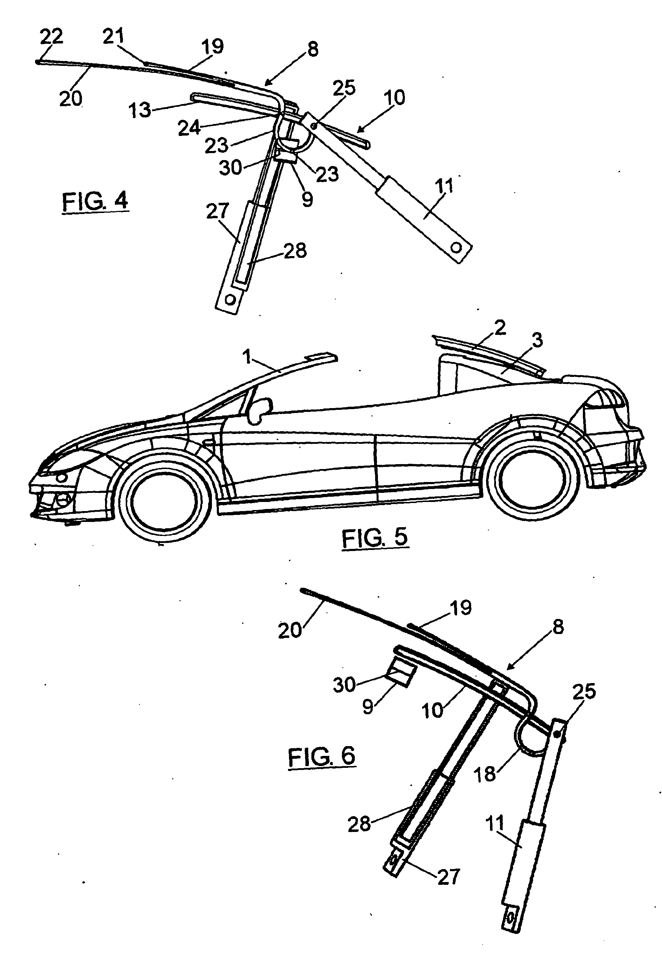

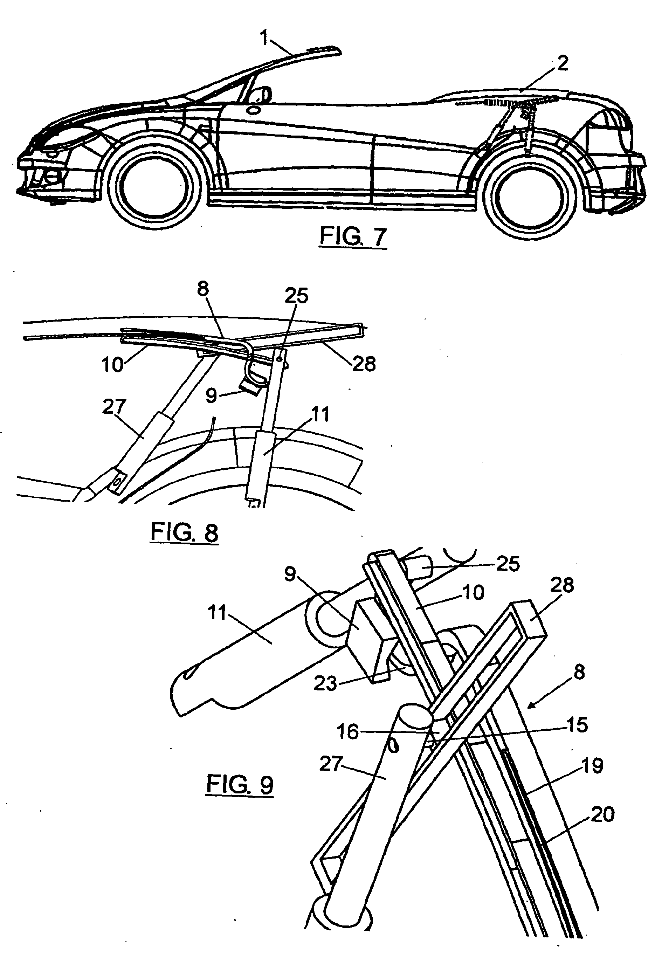

Figure 1 shows an automobile, whose roof comprises three independent rigid transverse parts, a fixed front one, indicated by number 1 including the front windshield, an, intermediate mobile part 2, defining the central area of the roof, and a back swinging part 3 which extends to the trunk and includes the rear windshield. The intermediate part 2 and back part 3 can move between a completely closed position, shown in figure 1, in which they are consecutively coupled, and an open position, shown in figure 9, in which the car roof is lowered down completely and in which the intermediate part 2 is attached on top of the back part 3 and they are both folded on top of the back part in short wheelbase automobiles, or in an intermediate area between the rear seats and the trunk when the length of the automobile allows it.
The shift from one position to the other is carried out first folding the intermediate part of the roof, which is performed in two movements, a slight rotation, which can be similar to a small elevation movement, which enables to unstuck the intermediate part 2 of the roof from the front part 1 and the back part 3, represented in figure 3, and a second movement, which consists of a backward movement, with a sightly curve path, until it is on top of the back part 3 of the roof, as shown in figure 5. Finally, the back part of the roof 3, swings downwardly, around the articulation axis 5 perpendicular to the longitudinal axis of the vehicle, with the intermediate part 2 attached thereto, attaining a total superposition of both parts and the folding thereof on the back area of the seats, in the position shown in figure 7, in which the automobile roof is completely lowered down.

To produce these movements the intermediate part 2 of the roof is connected to the back part by means of a mechanism, indicated by number 6, figure 1, while the back part 3 of the roof is connected to the automobile structure through the spin axis 5 and through an action mechanism indicated by number 7.

All these mechanisms are shown in figures 4, 6 and 9 to 13.

The mechanism that connects the intermediate part 2 with the back part 3 and through which the first elevation of the intermediate part and the backward movement of said part are produced, comprises, on each side of the automobile, a main bar 8, a rotation centering device 9, which is connected to the back part 3 of the roof, and a secondary bar 10 which is also connected to the back part 3 of the roof. The mechanism is completed by a hydraulic cylinder 11 to activate the main bar 8 which is articulated by its lower end to the structure of the automobile.

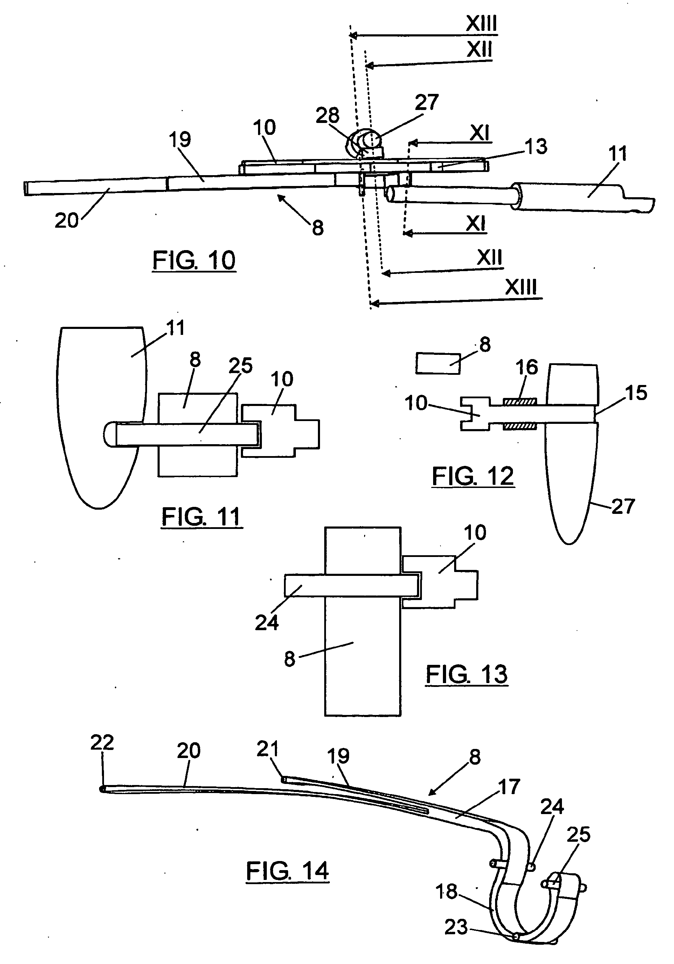

The secondary bar 10 is slightly arched and has on one of its sides, as clearly shown in figures 11 to 13 and 15, a longitudinal channel 12 and through the longitudinal walls of said channel there is a back lower outlet 13 and a front upper outlet 14. On the opposite side of said bar there protrudes an axis 15 on which a square 16 is mounted, which can rotate.

Figure 14 shows a perspective view of the main bar 8 including a straight front section 17 and a curve back section 18. The straight front section 17 branches into two arms, indicated by numbers 19 and 20, which articulate at their free end, through corresponding arms 21 and 22, with the ends of the corresponding side of the intermediate part of the roof 2, as indicated with the same references in figures 1 and 2. From the curve back section 18 of the arm there protrude three lateral pivots, a central one 23, through which the main arm 8 is connected to the rotation centering device 9 during the swinging phase of the main bar 8, as it will be indicated later, and two ends, indicated with numbers 24 and 25, through which this main arm will connect to the secondary bar 10, during the longitudinal movement phase of the intermediate part 2 of the roof, as it will be indicated below. Also, through the back pivot 25 the main bar is articulated to the cylinder 11.

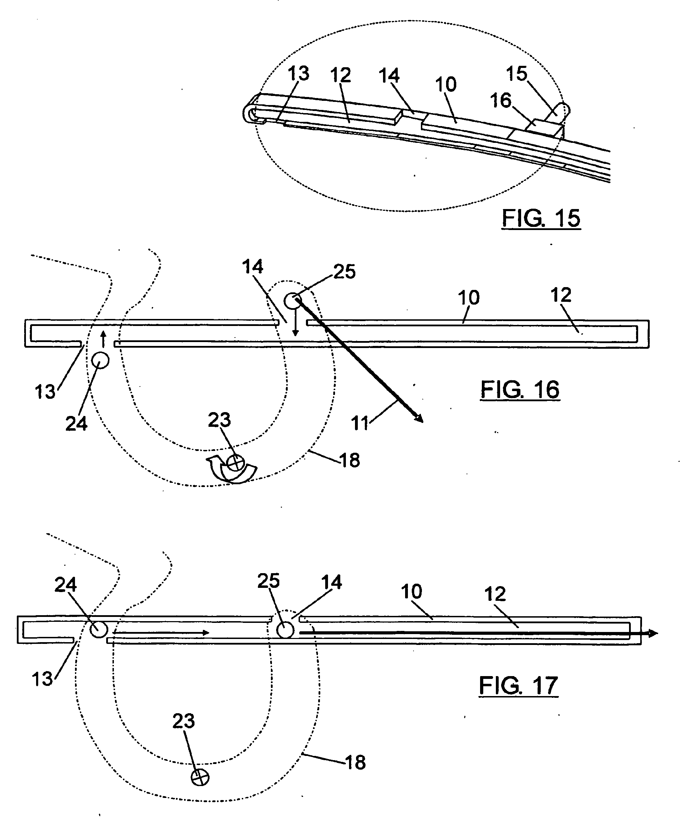

The back part 3 of the roof is connected to the structure of the vehicle through the previously described articulation axis 5 and an action mechanism 7, which, as can be seen in figures 4, 6 and 9 to 13, comprises a secondary bar 10, which is fixed to each side of the back part 3 of the roof, a hydraulic action cylinder 27, articulated to the bar 10 through the axis 15 thereof, and a runner 28 inside which the square 16 of the main bar is housed, figure 15.

The rotation centering device 9, as seen in figure 4, consists of a part comprising an approximately horizontal groove 30, in which the central pivot 23 of the curve section 23 of the main arm 8 is housed, during the initial elevation phase of the intermediate part 2 of the roof.

Figures 11, 12 and 13 show the connection and coupling of the different components of the action mechanisms of the central and back parts of the roof.

When the roof is closed, figure 1, the action mechanisms occupy the position of figure 2, in which the central lug 23 of the arched part 18 of the main bar 8 is inside the groove 30 of the rotation centering device 16, while the end lugs 24 and 25 of said arched part of the main bar are outside the channel 12 of the secondary bar 10, opposed to the front 13 and back openings 14, as shown in figure 16.

When the switch which activates the mechanism opening the convertible roof is pressed, a piston 11 is activated, said piston is joined to the free end of the arched part 18 of the main bar through an external pivot 25. The activation of the piston 11 supposes the retraction thereof, producing a clockwise turning of the main bar, when rotating around the central pivot 23, which is inside the channel 30 of the rotation centering device 9. This movement enables to unstuck the intermediate part of the roof 2 from the front part 1 and back part 3 thereof. Figure 3 shows when the central part of the roof starts to be unstuck, occupying the mechanism the position of figure 4.

The cylinder 11 continues with the retraction and at few degrees of rotation of the main bar 8, the lugs 24 and 25 penetrate into the chancel 12 of the secondary bar 10, through the openings 13 and 14, as shown in figure 17. Next, the piston 11, which continues to be retracted, makes the central lug 23 come out of the groove 30 of the rotation centering device 9, figure 6, being the main bar 8 forced to take a curve backward path, defined by the channel 12 of the secondary bar 10, with a slight curve. In this way, the main bar 8, through the arms 19 and 20 drives the intermediate part 2 of the roof, moving it backwards. The piston 11 continues acting and the main bar 8 moves in a parallel path to the profile of the car roof. Thus, it is finally attained that the intermediate part 2 of the roof be located just on top of the back part 3, both with the same inclination, as shown in figure 5, the action mechanisms occupying the position shown in figure 6.

Once the main bar 8 reaches the end of the path of the channel 12 of the secondary bar 10, the piston 11 stops acting and the activation of the piston 27 starts, which, like the piston 11, is articulated in its lower part to the structure of the automobile, while in its upper part it is articulated to the secondary bar 10 through the axis 15 thereof, figures 10 and 12.

When the piston 27 is driven downwardly, it causes all elements comprising the action mechanisms to start a downward movement, following a path marked by the runner 28. The vertical position of this runner enables the superposed intermediate 2 and back parts 3 of the roof to start an anticlockwise rotation, being the rotation centre the articulation axis 5 of the back part of the roof to the structure of the vehicle. Finally, when the square 16, figure 15, which is mounted in a revolving way on the axis 15, reaches the lower end of the runner 28, thanks to the possibility of rotation between the axis 15 and the square 16, it makes the runner 28, when it comes in contact with the back part 3 of the roof, while said part is going down, to turn clockwise and be finally located under said back part of the roof, as shown in figure 8, being the intermediate and back parts of the roof attached and coupled on top of the rear part of the automobile, as shown in figure 7.

## Claims

1. Automobile comprising a convertible roof arrangement which comprises three independent rigid transverse parts:
- a fixed front part (1), including the front windshield,
- an intermediate part (2), defining the central area of the roof, and
- a back part (3) which extends to the trunk and includes the rear windshield, where the intermediate and back parts can move between a closed position, in which they are consecutively coupled, and an open position, in which the intermediate part is attached on top of the back part and they are both folded over the rear seat area, or over an intermediate area between the rear seats and the trunk created due to the bigger length in long wheelbase vehicles; where the bach past (3) is connected to the structure of the vehicle through a back articulation axis (5), perpendicular to the longitudinal axis of the automobile and through an action mechanism (7), which causes the swinging of said back part, together with the attached central part (2), around the back articulation axis (5), between the closed position and the aforementioned folded position, in which it covers and closes the rear seat area or the intermediate area; and where the
intermediate part (2) is connected to the back part by means of a mechanism (6), which can move said intermediate part in height, between the close position and a position elevated over the back part, and longitudinally, between the elevated position and a back position in which it is superposed on top of the back part (3), the mechanism comprising, on each side:
a main bar (8) which supports said intermediate part,
a rotation centering device (9) for said main bar, which is connected to the back part (3) of the roof and causes the swinging of said main bar up to the elevation of the central part of the roof, and
a secondary bar (10) which is connected to the back part (3) of the roof and defines a curve guide on which the main bar (8) can be coupled, when its swinging over the rotation centering device (9) ends, to move along it, to longitudinally move the intermediate part (2) of the roof, until it is located on the back part (3) **characterized in that** the main bar (8) includes a straight front section and a curve back section (18), whose straight front section branches into two end arms (19-20) of different length, which articulate at their ends to the back and front end of the corresponding side of the intermediate part (23) of the roof, and whose curve back section (18) is articulated at its free end to an action cylinder (11 ) and has three lateral pivots, including a central pivot (23) through which it connects to the rotation centering device (9) during the swinging phase of said main bar (8), and two end pivots (24-25) through which it connects to the guide of the secondary bar (10), during the phase of longitudinal movement of the central part of the roof.

2. The automobile according to claim 1, **characterized in that** the aforementioned rotation centering device (9) comprises an approximately horizontal groove (30), along whith the central pivot (23) of the curve section (18) of the main bar (8) moves, during its swinging.

3. The automobile according to claim 1, **characterized in that** the secondary bar (10) is arched and has on one of its sides a longitudinal channel (12) where the end pivots (24-25) of the curved section (18) of the main bar are inserted, to define the guide of said main bar (8) and the anchoring thereof at the end of its longitudinal movement.

4. The automobile according to claim 3, **characterized in that** the longitudinal channel (12) of the secondary bar (10) has on longitudinal walls a lower outlet (13) and an upper outlet (14), to which the end pivots (24-25) of the curve side (18) of the main bar (8) can be opposed, the pivots being inserted in the channel through the aforementioned outlets, when said main bar ends its swinging.

5. The automobile according to claim 1-4, **characterized in that** the action mechanism (7) which causes the swinging of the back part (3) of the roof comprises an action cylinder (27) which is articulated in its lower part to the structure of the vehicle and in its upper part to the secondary bar (10) through an axis (15) laterally protruding from said bar, by the opposite side to that occupied by the longitudinal channel (12) thereof, said axis having on its base a square (16), rotating around the axis, which is housed in a runner (28) which drives the movement of the secondary bar (10), together with the main bar (8) associated to it, during the swinging of the back part of the roof from its elevated closed position to the lower completely open position.

## Patentansprüche

1. Kraftfahrzeug umfassend eine Klappdachanordnung, welche drei unabhängige starre transversale Teile umfasst:
- ein festes Vorderteil (1), welches die vordere Windschutzscheibe aufweist,
- ein Zwischenteil (2), welches den zentralen Bereich des Dachs definiert, und
- ein Hinterteil (3), welches sich zum Kofferraum erstreckt und die hintere Windschutzscheibe aufweist, wobei sich das Zwischenteil und das Hinterteil zwischen einer geschlossenen Position, in welcher sie hintereinander gekoppelt sind, und einer offenen Position, in welcher das Zwischenteil auf der Oberseite des Hinterteils befestigt ist, bewegen können, und beide über den hinteren Sitzbereich geklappt sind, oder über einen Zwischenbereich zwischen den hinteren Sitzen und dem Kofferraum gebildet wegen der größeren Länge in Fahrzeugen mit langem Radstand; wobei das Hinterteil (3) mit der Struktur des Fahrzeugs durch eine hintere Gelenkachse (5) verbunden ist, senkrecht zur Längsachse des Kraftfahrzeugs und durch einen Wirkmechanismus (7), welches die Schwenkung des genannten Hinterteils bewirkt, zusammen mit dem befestigten Zwischenteil (2), um die hintere Gelenkachse (5), zwischen der geschlossenen Position und der vorgenannten geklappten Position, in welcher der hintere Sitzbereich oder der Zwischenbereich gedeckt und geschlossen wird; und wobei das Zwischenteil (2) mit dem Hinterteil mittels eines Mechanismus (6) verbunden ist, welches das genannte Zwischenteil in Höhe, zwischen der geschlossenen Position und einer Position, welche über das Hinterteil hochgestellt ist, und longitudinal, zwischen der hochgestellten Position und einer hinteren Position, in welcher es auf der Oberseite des Hinterteils (3) überlagert ist, bewegen kann, wobei der Mechanismus auf jeder Seite Folgendes umfasst:
eine Hauptstange (8), welche das genannte Zwischenteil trägt,
eine Rotationszentrierungsvorrichtung (9) für die genannte Hauptstange, welche mit dem Hinterteil (3) des Dachs verbunden ist und die Schwenkung der genannten Hauptstange bis zur Hochstellung des Zwischenteils des Dachs bewirkt, und
eine sekundäre Stange (10), welche mit dem Hinterteil (3) des Dachs verbunden ist und eine gebogene Führung definiert, auf welche die Hauptstange (8) gekoppelt werden kann, wenn seine Schwenkung über die Rotationszentrierungsvorrichtung (9) entlang derselben endet, um das Zwischenteil (2) des Dachs longitudinal zu bewegen, bis es sich auf dem Hinterteil (3) befindet, **dadurch gekennzeichnet, dass** die Hauptstange (8) einen geraden vorderen Abschnitt und einen gebogenen hinteren Abschnitt (18) enthält, wobei sich der gerade vordere Abschnitt in zwei Endarme (19-20) verschiedener Länge verzweigt, welche sich an ihren Enden mit den hinteren und vorderen Ende von der entsprechenden Seite des Zwischenteils (23) des Dachs anlenken, und wobei sich der gebogene hintere Abschnitt (18) an seinem freien Ende mit einem Wirkzylinder (11) anlenkt und drei seitliche Zapfen hat, einschließlich eines zentralen Zapfens (23), mit dem er mit der Rotationszentrierungsvorrichtung (9) während der Schwenkphase der genannten Hauptstange (8) verbunden wird, und zwei Endzapfen (24-25), mit denen er mit der Führung der sekundären Stange (10), während der Phase der Längsbewegung des Dachs, verbunden wird.

2. Kraftfahrzeug gemäß Anspruch 1, **dadurch gekennzeichnet, dass** die vorgenannte Rotationszentrierungsvorrichtung (9) eine annährend horizontale Nut (30) umfasst, entlang welcher sich der zentrale Zapfen (23) des gebogenen Abschnitts (18) der Hauptstange (8) während der Schwingung bewegt.

3. Kraftfahrzeug gemäß Anspruch 1, **dadurch gekennzeichnet, dass** die sekundäre Stange (10) gewölbt ist und auf einer ihrer Seiten einen longitudinalen Kanal (12) hat, in dem die Endzapfen (24-25) des gebogenen Abschnitts (18) der Hauptstange eingeführt sind, um die Führung der genannten Hauptstange (8) und ihre Verankerung am Ende ihrer Längsbewegung zu definieren.

4. Kraftfahrzeug gemäß Anspruch 3, **dadurch gekennzeichnet, dass** der longitudinale Kanal (12) der sekundären Stange (10) auf Längswänden einen unteren Ausgang (13) und einen oberen Ausgang (14) hat, welchen die Endzapfen (24-25) der gebogenen Seite (18) der Hauptstange (8) gegenüberliegen können, wobei die Zapfen in dem Kanal durch die vorgenannten Ausgänge eingeführt sind, wenn die genannte Hauptstange ihre Schwenkung endet.

5. Kraftfahrzeug gemäß Anspruch 1-4, **dadurch gekennzeichnet, dass** der Wirkmechanismus (7), welches die Schwenkung des Hinterteils (3) des Dachs bewirkt, einen Wirkzylinder (27) umfasst, der in seinem unteren Teil mit der Struktur des Fahrzeugs und in seinem oberen Teil mit der sekundären Stange (10) durch eine Achse (15) angelenkt ist, welche seitlich von der genannten Stange ragt, an der Seite gegenüberliegend der, die von dem longitudinalen Kanal (12) derselben besetzt ist, wobei die genannte Achse in ihrem Boden ein Quadrat (16) hat, welches um die Achse rotiert, welches in einer Schiene (28) aufgenommen ist, welche die Bewegung der sekundären Stange (10), zusammen mit der Hauptstange (8), welche mit derselben verknüpft ist, während der Schwenkung des Hinterteils des Dachs von seiner hochgestellten geschlossenen Position in die untere, vollkommen geöffnete Position, führt.

## Revendications

1. Automobile comprenant une disposition de toit escamotable qui comprend trois parties transversales rigides indépendantes:
- une partie avant fixe (1 ) comportant le pare-brise avant,
- une partie intermédiaire (2), définissant la zone centrale du toit, et
- une partie arrière (3) qui s'étend jusqu'au coffre à bagages et comporte le pare-brise arrière, où les parties intermédiaire et arrière peuvent se déplacer entre une position fermée, dans laquelle elles sont accouplées de manière consécutive, et une position ouverte, dans laquelle la partie intermédiaire est fixée sur la partie supérieure de la partie arrière et elles sont toutes deux pliées sur la zone du siège arrière, ou sur une zone intermédiaire entre les sièges arrière et le coffre à bagages étant donné la longueur accrue dans les véhicules à empattement long; où la partie arrière (3) est reliée à la structure du véhicule à travers un axe d'articulation arrière (5), perpendiculaire à l'axe longitudinal de l'automobile et à travers un mécanisme d'action (7), qui cause le pivotement de ladite partie arrière, conjointement avec la partie centrale fixée (2), autour de l'axe d'articulation arrière (5), entre la position fermée et ladite position pliée, dans laquelle elle couvre et ferme la zone du siège arrière ou la zone intermédiaire; et où la partie intermédiaire (2) est reliée à la partie arrière d'un mécanisme (6), qui peut déplacer ladite partie intermédiaire en hauteur, entre la position fermée et une position élevée sur la partie arrière, et longitudinalement, entre la position élevée et un position arrière dans laquelle elle est superposée sur la partie arrière (3), le mécanisme comprenant, de chaque côté:
une barre principale (8) qui supporte ladite partie intermédiaire,
un dispositif de centrage de rotation (9) pour ladite barre principale, qui est relié à la partie arrière (3) d'un toit et cause le pivotement de ladite barre principale jusqu'à l'élévation de la partie centrale du toit, et
une barre secondaire (10) qui est reliée à la partie arrière (3) du toit et définit un guide courbé sur lequel la barre principale (8) peut se coupler, lorsque son pivotement sur le dispositif de centrage de rotation (9) s'achève, pour se déplacer le long de celui-ci, pour déplacer longitudinalement la partie intermédiaire (2) du toit, jusqu'à la situer sur la partie arrière (3), **caractérisé en ce que** la barre principale (8) comporte une section avant droite et une section arrière courbée (18), dont la section avant droite se ramifie en deux bras d'extrême (19-20) de différente longueur, qui s'articulent à leurs extrémités à l'extrémité arrière et avant du côté correspondant de la partie intermédiaire (23) du toit, et dont la section arrière courbée (18) est articulée à son extrémité libre à un cylindre d'action (11) et a trois pivots latéraux, en incluant un pivot central (23) à travers lequel elle se relie au dispositif de centrage de rotation (9) pendant la phase de pivotement de ladite barre principale (8), et deux pivots d'extrême (24-25) à travers lesquels elle se relie au guide de la barre secondaire (10), pendant la phase du déplacement longitudinal de la partie central du toit.

2. Automobile selon la revendication 1, **caractérisé en ce que** ledit dispositif de centrage de rotation (9) comprend une rainure approximativement horizontale (30), le long de laquelle se déplace le pivot central (23) de la section courbée (18) de la barre principale (8) pendant son pivotement.

3. Automobile selon la revendication 1, **caractérisé en ce que** la barre secondaire (10) est arquée et a sur un de ses côtés un canal central (12) où les pivots d'extrême (24-25) de la section courbée (18) de la barre principale sont insérés, pour définir le guide de ladite barre principale (8) et l'ancrage de celle-ci à la fin de son déplacement longitudinal.

4. Automobile selon la revendication 3, **caractérisé en ce que** le canal longitudinal (12) de la barre secondaire (10) a sur les parois longitudinales une sortie inférieure (13) et une sortie supérieure (14), auxquelles les pivots d'extrême (24-25) du côté courbé (18) de la barre principale (8) peuvent être opposés, les pivots étant insérés dans le canal à travers lesdites sorties, lorsque ladite barre principale termine son pivotement.

5. Automobile selon la revendication 1-4, **caractérisé en ce que** le mécanisme d'action (7) qui cause le pivotement de la partie arrière (3) du toit comprend un cylindre d'action (27) qui est articulé à sa partie inférieure à la structure du véhicule et à sa partie supérieure à la barre secondaire (10) à travers un axe (15) latéralement en porte à faux de ladite barre, du côté opposé à celui occupé par son canal longitudinal (12), ledit axe ayant sur sa base un carré (16), qui tourne autour de l'axe, qui est logé dans une goulotte (28) qui conduit le déplacement de la barre secondaire (10), conjointement avec la barre principale (8) associée à celui-ci, pendant le pivotement de la partie arrière du toit depuis sa position fermée élevée jusqu'à sa position complètement ouverte.
